# EUROPÄISCHE PATENTANMELDUNG

(11) **EP 2 562 043 A2**
(43) Veröffentlichungstag der Anmeldung: **27.02.2013**
(21) Anmeldenummer: 12174010.4
(22) Anmeldetag: 28.06.2012
(51) Int. Cl.: B60Q 1/12

(54) **Verfahren und Vorrichtung zur Anpassung einer Lichtaussendung von zumindest einem Scheinwerfer eines Fahrzeugs**

(30) Priorität: 23.08.2011 DE 102011081412
(71) Anmelder: ROBERT BOSCH GMBH, 70442 Stuttgart (DE)
(72) Erfinder: Mohamed, Manoj, 695009 Trivandrum, Kerala (IN)

(57) **Zusammenfassung**

Die Erfindung betrifft ein Verfahren (300) zur Anpassung einer Lichtaussendung von zumindest einem Scheinwerfer (130a, 130b) eines Fahrzeugs (100). Das Verfahren umfasst einen Schritt des Erkennens (310) eines instabilen Fahrtzustandes des Fahrzeugs (100), wobei sich im instabilen Fahrtzustand eine Richtung einer Längsachse (125) des Fahrzeugs (100) um mehr als einen Toleranzbereich von einer Bewegungsrichtung (123, 400) des Fahrzeugs (100) unterscheidet. Weiterhin umfasst das Verfahren einen Schritt des Bereitstellens (320) eines Ansteuersignals (135) zur Veränderung der Lichtaussendung des Scheinwerfers (130a, 130b) des Fahrzeugs (100) ansprechend auf den erkannten instabilen Fahrtzustand, wobei das Ansteuersignal (135) ausgebildet ist, um zur Anpassung der Lichtaussendung eine Veränderung der Lichtausstrahlungscharakteristik (145, 150, 155) des zumindest einen Scheinwerfers (130a, 130b) des Fahrzeugs (100) zu bewirken.

## Beschreibung

### Stand der Technik

Die vorliegende Erfindung bezieht sich auf ein Verfahren zur Anpassung einer Lichtaussendung von zumindest einem Scheinwerfer eines Fahrzeugs, auf eine entsprechende Vorrichtung sowie auf ein entsprechendes Computerprogrammprodukt.

Oftmals werden bei einem Schleudern in einer Kurvenfahrt eines Fahrzeugs diejenigen Bereiche einer Fahrbahn nicht ausreichend beleuchtet, in die sich das Fahrzeug während des Schleuderns bewegt. In der DE 10 2006 036 361 A1 ist zur Reduzierung eines solchen Problems ein Scheinwerfer bei einem Kraftfahrzeug offenbart, der bei einer Kurvenfahrt um eine Hochachse drehbar ist.

### Offenbarung der Erfindung

Vor diesem Hintergrund wird mit der vorliegenden Erfindung ein Verfahren, weiterhin ein Steuergerät, das dieses Verfahren verwendet sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Die vorliegende Erfindung schafft ein Verfahren zur Anpassung einer Lichtaussendung von zumindest einem Scheinwerfer eines Fahrzeugs, wobei das Verfahren die folgenden Schritte umfasst:
- Erkennen eines instabilen Fahrtzustandes des Fahrzeugs, wobei sich im instabilen Fahrtzustand eine Richtung einer Längsachse des Fahrzeugs um mehr als einen Toleranzbereich von einer Bewegungsrichtung des Fahrzeugs unterscheidet; und
- Bereitstellen eines Ansteuersignals zur Veränderung der Lichtaussendung des Scheinwerfers des Fahrzeugs ansprechend auf den erkannten instabilen Fahrtzustand, wobei das Ansteuersignal ausgebildet ist, um zur Anpassung der Lichtaussendung eine Veränderung der Lichtausstrahlungscharakteristik des zumindest einen Scheinwerfers des Fahrzeugs zu bewirken.

Ferner schafft die vorliegende Erfindung eine Vorrichtung zur Anpassung einer Lichtaussendung von zumindest einem Scheinwerfer eines Fahrzeugs, wobei die Vorrichtung die folgenden Merkmale umfasst:
- eine Einheit zum Erkennen eines instabilen Fahrtzustandes des Fahrzeugs, wobei sich in dem instabilen Fahrtzustand eine Richtung einer Fahrzeuglängsachse um mehr als einen Toleranzbereich von einer Bewegungsrichtung des Fahrzeugs unterscheidet; und
- eine Einheit zum Bereitstellen eines Ansteuersignals zur Veränderung der Lichtaussendung des Scheinwerfers des Fahrzeugs, wobei das Ansteuersignal ausgebildet ist, um zur Anpassung der Lichtaussendung eine Veränderung der Lichtausstrahlungscharakteristik des Scheinwerfers des Fahrzeugs zu bewirken.

Die vorliegende Erfindung schafft somit eine Vorrichtung, die ausgebildet ist, um die Schritte des erfindungsgemäßen Verfahrens in entsprechenden Einrichtungen durchzuführen bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuersignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem Computer oder einer Vorrichtung ausgeführt wird.

Unter einer Längsachse des Fahrzeugs kann eine Richtung verstanden werden, die einer Haupterstreckungsrichtung des Fahrzeugs entspricht. Dabei fährt das Fahrzeug bei der Fahrt meist in eine Richtung, die der Richtung der Erstreckung dieser Längsachse innerhalb eines Toleranzbereichs entspricht. Unter einer Bewegungsrichtung des Fahrzeugs ist eine Einrichtung einer Bewegung des Fahrzeugs über Grund zu verstehen, die sich beim Schleudern des Fahrzeugs von der Richtung der Längsachse des Fahrzeugs unterscheidet. Der instabile Fahrtzustand wird dabei dann erkannt, wenn sich die Richtung der Erstreckung der Längsachse des Fahrzeugs um mehr als einen Toleranzbereich von der Bewegungsrichtung des Fahrzeugs abweicht. In diesem Fall kann erkannt werden, dass das Fahrzeug nicht auf Lenkbewegungen reagiert, wie es sollte, so dass der instabile Fahrtzustand vorliegt. Unter einem Toleranzbereich kann dabei beispielsweise ein Bereich von 10° Abweichung zwischen der Richtung der Erstreckung der Längsachse des Fahrzeugs und der Bewegungsrichtung des Fahrzeugs, in günstigerweise aber ein Bereich von 5° Abweichung zwischen der Richtung der Erstreckung der Längsachse des Fahrzeugs und der Bewegungsrichtung des Fahrzeugs verstanden werden. Unter einer Veränderung einer Lichtaussendung des Scheinwerfers des Fahrzeugs kann beispielsweise eine konkrete Veränderung des durch Licht von dem Scheinwerfer beleuchteten Bereichs (beispielsweise auf der Fahrbahn vor dem Fahrzeug) verstanden werden. Unter einer Lichtausstrahlungscharakteristik kann eine Form oder ein Ausstrahlungswinkel verstanden werden, in der der oder in dem Licht von den Scheinwerfer auf einen Bereich der Fahrbahn aus gesandt wird. Beispielsweise kann unter einer Veränderung der Lichtausstrahlungscharakteristik ein Verdrehen des Scheinwerfers um eine vertikale Achse oder auch eine Veränderung von zumindest zwei Komponenten des Scheinwerfers zu einander verstanden werden, um eine Veränderung der Form und/oder der Position eines von dem Scheinwerfer beleuchteten Bereichs zu erreichen. In diesem Fall wird durch eine Veränderung der Lichtausstrahlungscharakteristik des Scheinwerfers auch die Veränderung der Lichtaussendung bewirkt.

Die vorliegende Erfindung basiert auf der Erkenntnis, dass in einem instabilen Fahrtzustand des Fahrzeugs durch Scheinwerfer des Fahrzeugs ein Bereich einer Fahrbahn beleuchtet wird, den das Fahrzeug bei der Bewegung entlang einer Bewegungstrajektorie nicht befahren wird. Die Beleuchtung eines derartigen Bereichs der Fahrbahn, der nicht befahren wird, bietet jedoch keine Vorteile für die Sicherheit des Fahrzeugs. Um eine Erhöhung der Sicherheit des Fahrzeugs zu ermöglichen, sollte ein Bereich der Fahrbahn beleuchtet werden, über den sich das Fahrzeug bei einer Bewegung auch hinwegbewegen wird. Dies kann dadurch sichergestellt werden, dass nach der Erkennung eines solchen instabilen Fahrtzustands ein Signal zur Ansteuerung einer Veränderung der Lichtaussendung durch einen Scheinwerfer des Fahrzeugs generiert wird, so dass eine Scheinwerfersteuereinheit die Lichtausstrahlungscharakteristik vorteilhafterweise derart einstellt, dass ein Bereich der Fahrbahn, über den sich auch im instabilen Fahrtzustand das Fahrzeug hinweg bewegen wird, oder der für die Fahrzeugsicherheit bei der Bewegung des Fahrzeugs relevant ist, zuvor auch durch Licht aus den Scheinwerfern zumindest teilweise ausgeleuchtet wird.

Die vorliegende Erfindung bietet den Vorteil die meist in Fahrzeugen bereits implementierten flexiblen Scheinwerfer für eine zusätzliche Sicherheitsfunktion in bestimmten insbesondere instabilen Fahrtzuständen einsetzen zu können. Hierdurch lässt sich durch die Implementierung der Bereitstellung des Ansteuersignals mit sehr geringen Zusatzkosten eine deutliche Erhöhung der Fahrzeugsicherheit realisieren.

Günstig ist es, wenn im Schritt des Erkennens der Fahrtzustand des Fahrzeugs unter Verwendung einer physikalischen Größe in Bezug auf eine Bewegung des Fahrzeugs und/oder eine Stellung eines Fahrzeugsteuerungsbedienelementes erkannt wird, insbesondere wobei die physikalische Größe eine Gierrate und/oder eine Lateralbeschleunigung umfasst und/oder die Stellung des Fahrzeugsteuerungsbedienelementes einen Lenkwinkel umfasst. Eine derartige Ausführungsform der vorliegenden Erfindung bietet den Vorteil, dass bereits in Fahrzeugen oftmals verfügbare Sensorsignale zur Erkennung des Fahrtzustands des Fahrzeugs verwendbar sind. Auf diese Weise kann eine kostengünstige Realisierung des hier vorgeschlagenen Ansatzes ohne die Erfordernis von weiteren Sensoren ausgeführt werden.

Gemäß einer weiteren Ausführungsform der vorliegenden Erfindung kann im Schritt des Erkennens der Fahrtzustand des Fahrzeugs unter Verwendung von Bilddaten einer Kamera erkannt wird. Eine derartige Ausführungsform der vorliegenden Erfindung bietet den Vorteil, dass in modernen Fahrzeugen bereits serienmäßig eine Kamera zur Umfelderkennung implementiert ist, die beispielsweise mit einer speziellen Routine erfassten Bilddaten auswerten kann und hierdurch einen Rückschluss auf einen bestimmten insbesondere instabilen Fahrtzustand des Fahrzeugs ermöglicht. Hierdurch lässt sich dieser instabile Fahrtzustand auch ohne Rückgriff auf Sensorsignale erkennen, die direkt oder indirekt einen Kontakt zwischen Rad und Boden oder andere Parameter einer Bewegungsdynamik wie eine Beschleunigung oder Gierrate auswerten. Die Erkennung des instabilen Fahrtzustands wird hierdurch robuster, insbesondere wenn die Erkennung des Fahrtzustands auf der Basis der Auswertung der vorstehend genannten physikalischen Größen durch die Verwendung der Bilddaten der Kamera verifiziert wird. Alternativ kann auch eine Verifikation des auf der Basis von Bilddaten einer Kamera erkannten instabilen Fahrtzustandes auf der Basis von zumindest einer der vorstehend genannten physikalischen Größen verifiziert werden.

Besonders günstig ist es, wenn ferner ein Schritt des Veränderns der Lichtaussendung des zumindest einen Scheinwerfers des Fahrzeugs unter Verwendung des Ansteuersignals vorgesehen ist, wobei eine Lichtausstrahlungscharakteristik des Scheinwerfers derart verändert wird, dass nach dem Verändern zumindest ein Bereich zwischen der Richtung der Fahrzeuglängsachse und der Bewegungsrichtung des Fahrzeugs mit einer höheren Lichtintensität ausgeleuchtet ist, als vor dem Verändern. Eine derartige Ausführungsform der vorliegenden Erfindung bietet den Vorteil einer deutlich besseren Erkennbarkeit von Objekten, die sich auf einem Bewegungsweg oder in einer Bewegungstrajektorie des Fahrzeugs befinden.

Gemäß einer weiteren Ausführungsform der vorliegenden Erfindung kann im Schritt des Veränderns eine räumliche Form der Lichtausstrahlungscharakteristik des zumindest einen Scheinwerfers verändert werden, insbesondere wobei eine Form eines Reflektors des zumindest einen Scheinwerfers verändert wird oder zumindest eine Lichtquelle des zumindest einen Scheinwerfers relativ zu einer Ursprungsposition im Scheinwerfer verändert wird. Eine derartige Ausführungsform der vorliegenden Erfindung bietet den Vorteil, dass durch die Veränderung der räumlichen Form die Lichtausstrahlungscharakteristik entsprechend der jeweiligen Situation eingestellt werden kann. Im Gegensatz zu einer einfachen Verdrehung des Scheinwerfers um eine vertikale Achse bietet sich hierdurch eine deutlich bessere und meist auch schnellere Möglichkeit der Ausleuchtung des Bereichs der Fahrbahn in dem erkannten instabilen Fahrtzustand, die wiederum in einer Erhöhung der Fahrtsicherheit resultiert.

Um eine besonders gute Ausleuchtung eines Bereichs der Fahrbahn vor dem Fahrzeug zu erreichen, kann im Schritt des Veränderns ferner eine des Lichtaussendung eines weiteren Scheinwerfers des Fahrzeugs unter Verwendung des Ansteuersignals verändert werden, wobei eine Lichtausstrahlungscharakteristik des weiteren Scheinwerfers unterschiedlich als die Lichtausstrahlungscharakteristik des Scheinwerfers verändert wird. Dadurch, dass die Lichtausstrahlungscharakteristik von zwei unterschiedlichen Scheinwerfer unterschiedlich verändert wird, lässt sich eine besonders flexible Anpassung oder Ausgestaltung des durch die zumindest zwei Scheinwerfer beleuchteten Bereichs der Fahrbahn entsprechend der erkannten instabilen Fahrtsituation oder dem erkannten Fahrtzustand des Fahrzeugs anpassen.

Um sicherzustellen, dass die angesteuerte Veränderung der Lichtaussendung tatsächlich auch umgesetzt ist oder ob möglicherweise eine Berücksichtigung von weiteren Objekten vor dem Fahrzeug für die Anpassung der Lichtaussendung erforderlich ist, kann ferner ein Schritt des Überprüfens der Veränderung der Lichtausstrahlung des zumindest einen Scheinwerfers unter Verwendung einer Kamera vorgesehen sein, die einen durch den zumindest einen Scheinwerfer beleuchteten Bereich vor dem Fahrzeug in Bewegungsrichtung des Fahrzeugs erfasst. Dabei kann auch beispielsweise ein Fehler in der Ansteuerung der Lichtaussendung erkannt werden, so dass beispielsweise ein Hinweis auf eine Neukalibrierung des Scheinwerfers und/oder eine Reparatur des Scheinwerfers oder von Komponenten des Scheinwerfers ausgegeben werden kann.

Die Erfindung wird nachstehend anhand der beigefügten Zeichnungen beispielhaft näher erläutert. Es zeigen:
- Fig. 1: ein Blockschaltbild eines Fahrzeugs, in dem ein Ausführungsbeispiel der vorliegenden Erfindung implementiert ist;
- Fig. 2: eine Abfolge von Zuständen, die gemäß einem Ausführungsbeispiel der vorliegenden Erfindung eingenommen werden können;
- Fig. 3: ein Ablaufdiagramm eines Ausführungsbeispiels der vorliegenden Erfindung als Verfahren;
- Fig. 4a: eine Abfolge von Darstellungen eines Fahrzeugs in einem instabilen Fahrtzustand an unterschiedlichen Positionen auf der Fahrbahn, wobei die hier vorgeschlagene Erfindung nicht eingesetzt wird; und
- Fig. 4b: eine Abfolge von Darstellungen des Fahrzeugs aus Fig. 4a in einem instabilen Fahrtzustand an unterschiedlichen Positionen auf der Fahrbahn, wobei die hier vorgeschlagene Erfindung eingesetzt wird.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

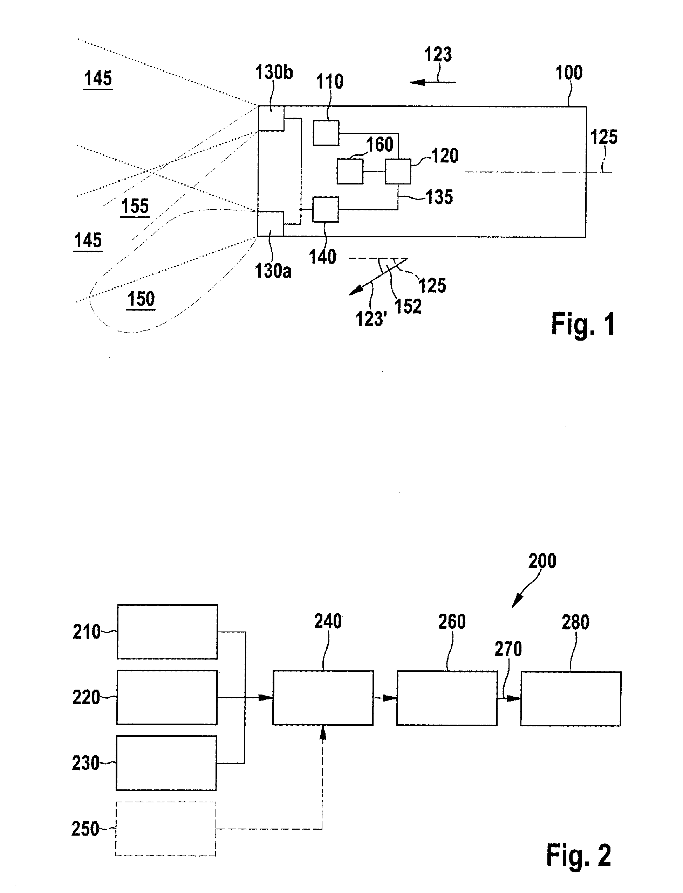

Fig. 1 zeigt ein Blockschaltbild eines Fahrzeugs 100, in dem ein Ausführungsbeispiel der vorliegenden Erfindung verwendet wird. Das Fahrzeug 100 weist einen Sensor 110 für eine physikalische Größe auf, wobei diese physikalische Größe eine Bewegung des Fahrzeugs 100 repräsentiert. Beispielsweise kann diese physikalische Größe eine Gierrate, eine laterale Beschleunigung (das heißt eine seitliche Beschleunigung in Bezug auf die Fahrtrichtung), ein Lenkwinkel oder eine andere physikalische Größe sein, die durch eine Bewegung des Fahrzeugs resultiert oder die durch eine Stellung eines von einem Fahrer des Fahrzeugs 100 zu betätigendes Fahrzeugbedienelement einen Einfluss auf die Bewegung des Fahrzeugs 100 nimmt. Ein Sensorsignal dieses Sensors 110, dass die physikalische Größe oder eine Mehrzahl von physikalischen Größen repräsentiert, wird nun einer Auswerteeinheit 120 zugeführt, in welcher eine Ermittlung eines instabilen Fahrtzustands erfolgt, der als sicherheitskritisch zu bezeichnen ist. Ein solcher Fahrtzustand kann auch als instabiler Fahrtzustand bezeichnet werden. Bei einem solchen instabilen Fahrtzustand weicht eine tatsächliche Bewegungsrichtung 123 des Fahrzeugs bei der Fahrt des Fahrzeugs 100 von einer Erstreckungsrichtung der Längsachse 125 des Fahrzeugs 100 um mehr als einen Toleranzbereich ab.

Insbesondere kann ein solcher Fahrtzustand dann auftreten, wenn in einer Fahrtsituation der Fahrer des Fahrzeugs 100 das Fahrzeug übersteuert oder untersteuert. In einer solchen Situation ist die Gefahr einer Kollision oder eines Abkommens von der Fahrbahn deutlich erhöht, so dass die Fahrzeugsicherheit in diesem (instabilen) Fahrtzustand hochgradig gefährdet ist. Dies gilt insbesondere, wenn bei Dunkelheit Objekte nicht erkannt werden, die sich im tatsächlich in Bewegungswegs des Fahrzeugs 100 befinden, die durch Fahrzeugscheinwerfer 130a und 130b des Fahrzeugs 100 nicht angesteuert werden und somit auch vom Fahrer des Fahrzeugs 100 nicht oder nur zu spät erkannt werden können. Der Fahrer des Fahrzeugs 100 kann damit nicht mehr rechtzeitig auf das Vorhandensein eines solchen Objektes im tatsächlichen Bewegungsweg des Fahrzeugs reagieren, wenn das Fahrzeug wieder in einen stabilen Fahrtzustand gerät.

Um eine solche gefährliche Situation zu vermeiden, wird in der Auswerteeinheit 120 eine Schätzung desjenigen Winkels ausgeführt, der sich zwischen der Erstreckungsrichtung der Längsachse 125 des Fahrzeugs und der tatsächlichen Bewegungsrichtung 123 des Fahrzeugs 100 ergibt. Liegt dieser (Differenz-) Winkel außerhalb eines Toleranzbereichs von beispielsweise 5° oder 10° um die Erstreckungsrichtung der Längsachse 125 des Fahrzeugs oder die Bewegungsrichtung 123 des Fahrzeugs 100, ist davon auszugehen, dass ein instabiler Fahrtzustand, beispielsweise ein Schleudern des Fahrzeugs 100, vorliegt. In einem solchen Fall sollte eine Veränderung der Lichtaussendung von Lichtscheinwerfern in ein Umfeld des Fahrzeugs 100 erfolgen, um dem Fahrer des Fahrzeugs 100 eine verbesserte Wahrnehmungsmöglichkeit für ein Objekt zu bieten, welches sich im tatsächlichen Bewegungsweg des Fahrzeugs 100 befindet.

Um einer solchen gefährlichen Fahrtsituation zu begegnen wird in der Auswerteeinheit 120 als Ansteuersignal 135 beispielsweise die tatsächliche Bewegungsrichtung des Fahrzeugs 100 (die auch als Driftrichtung des Fahrzeugs 100 bezeichnet werden kann) und ein Offset-Winkel bestimmt, der zwischen der aktuellen Hauptleuchtrichtung der Lichtaussendung durch die Scheinwerfer 130 und dieser tatsächlichen Bewegungsrichtung des Fahrzeugs 100 liegt. Dabei kann beispielsweise die Hauptleuchtrichtung der Lichtaussendung durch die Scheinwerfer, die nicht notwendigerweise mit der Erstreckungsrichtung der Fahrzeuglängsachse 125 zusammenfallen braucht, ermittelt und zur Ermittlung des Ansteuersignals 135 herangezogen. Die Information des Ansteuersignals 135 wird an eine Scheinwerfersteuereinheit 140 übertragen, welche dann unter Verwendung des Ansteuersignals 135 den oder die Scheinwerfer 130 derart ansteuert, dass die Lichtausstrahlungscharakteristik zumindest eines Scheinwerfers 130 verändert wird. Eine solche Veränderung der Lichtausstrahlungscharakteristik kann im Falle eines instabilen Fahrtzustandes des in Fig. 1 dargestellten Fahrzeugs 100 beispielsweise derart erfolgen, dass von dem in Fig. 1 dargestellten unteren Scheinwerfer 130a eine Lichtausstrahlung von einer Kegelform 145 in eine unregelmäßige Fingerform 150 geändert wird, wenn erkannt wird, dass ein Offset-Winkel 152 zwischen der tatsächliche Bewegungsrichtung 123 des Fahrzeugs 100 im instabilen Fahrtzustand und der Erstreckungsrichtung der Fahrzeuglängsachse 125 größer als ein Toleranz-Offset-Winkel ist. In diesem Fall weicht somit die tatsächliche Bewegungsrichtung 123 des Fahrzeugs 100 im instabilen Fahrtzustand um mehr als einen Toleranzbereich von der Erstreckungsrichtung der Fahrzeuglängsachse 125 ab. Wird auf diese Weise ein instabiler Fahrtzustand des Fahrzeugs 100 erkannt, kann beispielsweise durch eine Veränderung von einem oder mehreren Mikrospiegeln in einem Reflektor zumindest einer der Scheinwerfer 130, nämlich dem ersten Scheinwerfer 130a, derart verstellt werden, dass sich seine Lichtausstrahlungscharakteristik verändert. Alternativ oder zusätzlich kann auch ein Reflektor des Scheinwerfers 130a um eine vertikale Achse geschwenkt werden, um einen in Fig. 1 links unter dem Fahrzeug 100 befindlichen Bereich auszuleuchten, und somit die Sicherheit des Fahrzeugs 100 bei der Fahrt zu erhöhen.

Weiterhin kann in der Scheinwerfersteuereinheit 140 auch der zweite Scheinwerfer 130b derart angesteuert werden, dass eine Lichtausstrahlungscharakteristik gegenüber einer ursprünglichen Situation verändert wird. Dabei kann die Lichtausstrahlungscharakteristik des zweiten Scheinwerfers 130b auf eine andere Weise, beispielsweise in eine andere Form verändert werden, wie die Lichtausstrahlungscharakteristik des (ersten) Scheinwerfers 130a. Beispielsweise kann die Lichtausstrahlungscharakteristik des zweiten Scheinwerfers 130b von einer ersten Kegelform 145 in eine andere, zweite Kegelform 155 geändert werden. Dabei kann die erste Kegelform 145 der ursprünglichen Lichtausstrahlungscharakteristik des (ersten) Scheinwerfers 130a entsprechen, so dass in dieser ursprünglichen Situation beide Scheinwerfer 130 die gleiche Lichtausstrahlungscharakteristik aufweisen. Auf diese Weise kann durch die unterschiedliche Veränderung der Lichtausstrahlungscharakteristik des ersten Scheinwerfers 130a und des zweiten Scheinwerfers 130b eine möglichst gute Ausleuchtung eines bestimmten Fahrbahnbereichs vor dem Fahrzeug 100 im Falle einer instabilen Fahrtsituation erreicht werden.

Alternativ oder zusätzlich ist es auch möglich, dass die Auswerteeinheit 120 die Ermittlung eines bestimmten Fahrtzustands auf der Basis von Bilddaten einer Kamera 160 vornimmt, die einen Bereich vor dem Fahrzeug 100 bildlich erfasst. Eine Auswertung einer Sequenz von Bildern dieser Kamera 160 ermöglicht dann beispielsweise die Feststellung, dass sich das Fahrzeug in einem instabilen Fahrtzustand, beispielsweise in einem Schleuderzustand befindet. In diesem instabilen Fahrtzustand liegt dann beispielsweise die Längsachse 125 des Fahrzeugs 100 nicht mehr innerhalb eines vorbestimmten Toleranzbereichs um die Bewegungsrichtung 123 des Fahrzeugs 100. Die Längsachse 125 kann dabei durch eine entsprechende Position im Bild der Kamera 160 und einer bekannten Ausrichtung der Blickrichtung der Kamera 160 ermittelt werden.

Fig. 2 zeigt eine schematische Darstellung oder ein Ablaufdiagramm zur Ausführung eines Ausführungsbeispiels der vorliegenden Erfindung als Verfahren. Dabei wird zunächst beispielsweise eine Gierrate 210 von einem Gierratensensor, eine laterale Beschleunigung 220 von einem entsprechend ausgebildeten lateralen Beschleunigungssensor und/oder ein Lenkwinkel 230 von einem entsprechend ausgebildeten Lenkwinkelsensor bereitgestellt. Aus diesen Informationen wird nachfolgend eine Situation des Übersteuerns 240 des Fahrzeugs ermittelt.

Alternativ oder zusätzlich kann diese Situation des Übersteuerns 240 des Fahrzeugs auch aus Bilddaten 250 bestimmt werden, die von einer Kamera in dem Fahrzeug geliefert werden. Die Kamera kann dabei eine einzelne Kamera oder eine Mehrfach-Kamera wie beispielsweise eine Stereokamera sein, die die Bilddaten 250 liefert. Wird nun eine solche Situation des Übersteuerns 240 erkannt, erfolgt eine Schätzung 260 des Fahrzeugschleuderwinkels, der beispielsweise durch einen Winkel 152 aus Fig. 1 repräsentiert ist, der sich zwischen der Fahrzeuglängsachse 125 und einer tatsächlichen Bewegungsrichtung 123 des Fahrzeugs 100 ergibt. Dieser Fahrzeugschleuderwinkel 152 kann dabei als Offset-Winkel betrachtet werden, um den eine Lichtaussendungsrichtung von Licht der Scheinwerfer maximal in Richtung der Bewegungsrichtung des Fahrzeugs gedreht werden sollte, um eine möglichst optimale Beleuchtung der Fahrbahn vor dem Fahrzeug sicherzustellen, auch bei einem instabilen Fahrtzustand wie beispielsweise einem Schleudern des Fahrzeugs. In diesem Fall kann die tatsächliche Bewegungsrichtung 125 und dieser Offset-Winkel 152 als ein Ansteuersignal 270 an eine intelligente Frontlichtsteuereinheit übertragen werden, die eine entsprechende Anpassung oder Veränderung 280 der Lichtaussendung durch die Scheinwerfer vornimmt oder ansteuert. Diese Veränderung der Lichtaussendung kann beispielsweise durch die Veränderung einer Lichtausstrahlungscharakteristik von einem oder mehreren Scheinwerfern umgesetzt werden.

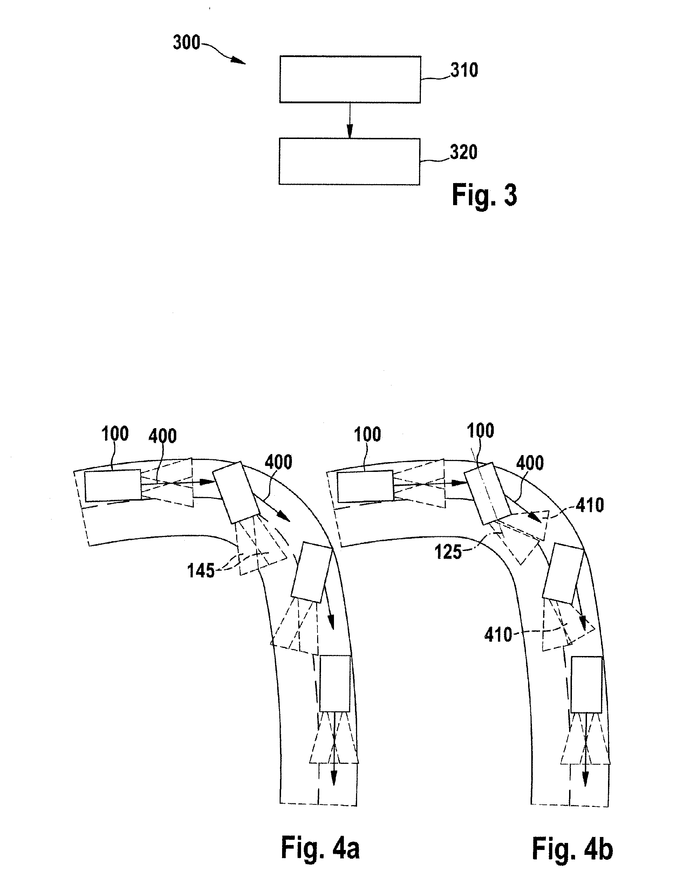

Fig. 3 zeigt ein Ablaufdiagramm eines vereinfachten Ausführungsbeispiels der vorliegenden Erfindung als Verfahren 300 zur Anpassung einer Lichtaussendung von zumindest einem Scheinwerfer eines Fahrzeugs. Das Verfahren umfasst einen Schritt des Erkennens 310 eines instabilen Fahrtzustandes des Fahrzeugs, in dem sich eine Richtung der Fahrzeuglängsachse um mehr als einen Toleranzbereich von einer Bewegungsrichtung des Fahrzeugs unterscheidet. Ferner umfasst das Verfahren 300 einen Schritt des Bereitstellens 320 eines Ansteuersignals zur Veränderung der Lichtaussendung des Scheinwerfers des Fahrzeugs ansprechend auf den erkannten instabilen Fahrzustand des Fahrzeugs, wobei das Ansteuersignal ausgebildet ist, um bei zur Anpassung der Lichtaussendung eine Veränderung der Lichtausstrahlungscharakteristik des Scheinwerfers des Fahrzeugs zu bewirken.

Fig. 4a zeigt einen Bewegungsablauf dieses Fahrzeugs in einem instabilen Fahrtzustand in einer Abfolge von Darstellungen eines Fahrzeugs 100 an unterschiedlichen Positionen auf einer Fahrbahn, der beispielsweise durch ein Übersteuern verursacht wird. Dabei wird in der Abfolge aus Fig. 4a der vorstehend näher beschriebenen Ansatz nicht verwendet. Wie aus der Abfolge von Darstellungen aus Fig. 4a ersichtlich ist, fährt das Fahrzeug 100 in einer Bewegungsrichtung 400, die der Bewegungsrichtung 123 aus Fig. 1 entspricht, in eine Kurve ein, wobei der Fahrer des Fahrzeugs 100 das Fahrzeug durch eine Unterschätzung des Kurvenradius und eine nachfolgende Erkennung dieser Unterschätzung des Kurvenradius dann das Fahrzeug 100 übersteuert. Dies führt dazu, dass das Fahrzeug 100 ins Schleudern gerät, so dass eine Fahrzeuglängsachse weiter in Richtung der Innenseite der Kurve ausgerichtet ist, als die Bewegungsrichtung 400, in die sich das Fahrzeug 100 tatsächlich bewegt. Aus der Darstellung gemäß Fig. 4a ist dann ersichtlich, dass die Scheinwerfer je einen Bereich 145 vor dem Fahrzeug beleuchten, der nicht vom Fahrzeug 100 befahren werden wird. Tritt nun beispielsweise ein Objekt in einem nicht von den Scheinwerfern des Fahrzeugs 100 beleuchteten Bereich auf einer Fahrspur auf, auf der sich das Fahrzeug 100 bewegt, nimmt der Fahrer dieses Objekt sehr spät war, so dass er möglicherweise nicht mehr hinreichend schnell reagieren kann, wenn er das Fahrzeug 100 wieder in einen stabilen Fahrtzustand gebracht hat.

Fig. 4b zeigt dagegen einen Bewegungsablauf dieses Fahrzeugs 100 in einem instabilen Fahrtzustand in einer Abfolge von Darstellungen dieses Fahrzeugs 100 an unterschiedlichen Positionen auf der Fahrbahn. In dem in Fig. 4b dargestellten Bewegungsablauf wird der vorstehend genannte Ansatz zur Anpassung der Lichtaussendung verwendet.

Wie aus der Darstellung der Fahrzeuge 100 an unterschiedlichen Positionen der Fahrbahn aus Fig. 4b zu erkennen ist, fährt das Fahrzeug 100 in eine Kurve ein, wobei der Fahrer das Fahrzeug 100 übersteuert. Hierdurch ergibt sich eine Bewegungsrichtung 400 des Fahrzeugs 100, die sich von einer Richtung der Fahrzeuglängsachse 125 um mehr als einen Toleranzbereich unterscheidet. In diesem Fall wird die Ausleuchtungscharakteristik von Scheinwerfern des Fahrzeugs 100 verändert, um die Fahrbahn in einem Bereich 410 zu beleuchten, der in dieser Bewegungsrichtung 400 oder der Bewegungstrajektorie des Fahrzeugs 100 liegt. Auf diese Weise lassen sich Objekte, die sich in diesem Bereich 410 befinden und eine Gefährdung für das Fahrzeug 100 bilden, deutlich besser erkennen, so dass der Fahrer des Fahrzeugs 100 auf diese Objekte somit frühzeitig reagieren kann. Aus der Darstellung aus Fig. 4b ist ferner erkennbar, dass die Lichtausstrahlungscharakteristiken der beiden Scheinwerfer des Fahrzeugs 100 ursprünglich nahezu identisch sind und bei einem instabilen Fahrtzustand auf unterschiedliche Weise verändert werden, um einen möglichst großen und optimal ausgeleuchteten Bereich 410 zu erhalten, der in diesem instabilen Fahrtzustand auf der Bewegungstrajektorie des Fahrzeugs 400 liegt, der jedoch ohne Verwendung des hier vorgestellten Ansatzes durch die Fahrzeugscheinwerfer nicht ausgeleuchtet würde.

Zusammenfassend ist somit anzumerken, dass, wenn ein Fahrzeug in eine Übersteuerungs- oder Untersteuerungssituation gerät, die Richtung der Bewegung des Fahrzeugs unterschiedlich sein kann zu einer Ausrichtung des Fahrzeugs und folglich zu einer Richtung, auf die die Frontscheinwerfer zeigen. Dies könnte anderenfalls eine unpassende Beleuchtung der vorausliegenden Straße durch die Frontlichter in die Bewegungsrichtung des Fahrzeugs zur Folge haben.

Es soll folglich eine bessere Beleuchtung der Straße in Bewegungsrichtung des Fahrzeugs erreicht werden.

Eine Übersteuerungs- oder Untersteuerungssituation kann durch Verwendung einer Gierrate, einer lateralen Beschleunigung und eines Lenkwinkelsensors (der eventuell als Teil des EPS-Systems implementiert sein könnte) erkannt werden Ein alternativer Weg besteht in der Verwendung einer Kamera des zur Erkennung und Schätzung einer Übersteuerungs- oder Untersteuerungssituation.

Ist die Über-/Untersteuerungssituation erkannt, sind die Richtung und das Ausmaß geschätzt, in die die Richtung der Lichtausstrahlung verändert werden sollte. Abhängig von der Richtung und dem Ausmaß des Über-/Untersteuerns bewegt die intelligente Frontlichtsteuerung den Frontlichtstrahl seitwärts, um die Straße in der Bewegungsrichtung zu beleuchten.

Ist im Fahrzeug ein ESP installiert, ist die Wahrscheinlichkeit des Eintretens des Fahrzeugs in eine Über-/Untersteuerungssituation vermindert. Folglich ist die Erfindung möglicherweise besser verwendbar, wenn es einen expliziten Versuch gibt, in eine Übersteuerungssituation (beispielsweise bei einem Fahrzeug für Schleuderrennen) zu gelangen.

Eine ähnliche Situation könnte während eines Untersteuerns (Fahrzeug und Frontlichtstrahl zeigen auf einer Kurve) auftreten und eine ähnliche Lösung könnte vorgeschlagen werden.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (300) zur Anpassung einer Lichtaussendung von zumindest einem Scheinwerfer (130a, 130b) eines Fahrzeugs (100), wobei das Verfahren (300) die folgenden Schritte umfasst:
- Erkennen (310) eines instabilen Fahrtzustandes des Fahrzeugs (100), wobei sich im instabilen Fahrtzustand eine Richtung einer Längsachse (125) des Fahrzeugs (100) um mehr als einen Toleranzbereich von einer Bewegungsrichtung (123, 400) des Fahrzeugs (100) unterscheidet; und
- Bereitstellen (320) eines Ansteuersignals (135) zur Veränderung der Lichtaussendung des Scheinwerfers (130a, 130b) des Fahrzeugs (100) ansprechend auf den erkannten instabilen Fahrtzustand, wobei das Ansteuersignal (135) ausgebildet ist, um zur Anpassung der Lichtaussendung eine Veränderung der Lichtausstrahlungscharakteristik (145, 150, 155) des zumindest einen Scheinwerfers (130a, 130b) des Fahrzeugs (100) zu bewirken.

2. Verfahren (300) gemäß Anspruch 1, **dadurch gekennzeichnet, dass** im Schritt des Erkennens (310) der Fahrzustand des Fahrzeugs (100) unter Verwendung einer physikalischen Größe in Bezug auf eine Bewegung des Fahrzeugs (100) und/oder eine Stellung eines Fahrzeugsteuerungsbedienelementes erkannt wird, insbesondere wobei die physikalische Größe eine Gierrate und/oder eine Lateralbeschleunigung umfasst und/oder die Stellung des Fahrzeugsteuerungsbedienelementes einen Lenkwinkel umfasst.

3. Verfahren (300) gemäß einem der vorangegangenen Ansprüche, **dadurch gekennzeichnet, dass** im Schritt des Erkennens (310) der Fahrzustand des Fahrzeugs (100) unter Verwendung von Bilddaten einer Kamera (160) erkannt wird.

4. Verfahren (300) gemäß einem der vorangegangenen Ansprüche, **dadurch gekennzeichnet, dass** ferner ein Schritt des Veränderns der Lichtaussendung des zumindest einen Scheinwerfers (130a, 130b) des Fahrzeugs (100) unter Verwendung des Ansteuersignals (135) vorgesehen ist, wobei eine Lichtausstrahlungscharakteristik (145) des Scheinwerfers (130a, 130b) derart verändert wird, dass nach dem Verändern zumindest ein Bereich zwischen der Richtung der Fahrzeuglängsachse (125) und der Bewegungsrichtung (400) des Fahrzeugs (100) mit einer höheren Lichtintensität ausgeleuchtet ist, als vor dem Verändern.

5. Verfahren (300) gemäß Anspruch 4, **dadurch gekennzeichnet, dass** im Schritt des Veränderns eine räumliche Form der Lichtausstrahlungscharakteristik (145, 150, 155) des zumindest einen Scheinwerfers (130a, 130b) verändert wird, insbesondere wobei eine Form eines Reflektors des zumindest einen Scheinwerfers (130a, 130b) verändert wird und/oder zumindest eine Lichtquelle des zumindest einen Scheinwerfers (130) relativ zu einer Ursprungsposition im Scheinwerfer (130) verändert wird.

6. Verfahren (300) gemäß einem der vorangegangenen Ansprüche 4 oder 5, **dadurch gekennzeichnet, dass** im Schritt des Veränderns ferner eine Lichtaussendung eines weiteren Scheinwerfers (130b) des Fahrzeugs (130) unter Verwendung des Ansteuersignals (135) verändert wird, wobei eine Lichtausstrahlungscharakteristik (145) des weiteren Scheinwerfers (130b) unterschiedlich als die Lichtausstrahlungscharakteristik (150) des Scheinwerfers (130a) verändert wird.

7. Verfahren (300) gemäß einem der vorangegangenen Ansprüche 4 bis 6, **dadurch gekennzeichnet, dass** ferner ein Schritt des Überprüfens des Veränderns der Lichtausstrahlung des zumindest einen Scheinwerfers (130a, 130b) unter Verwendung einer Kamera (160), die einen durch den zumindest einen Scheinwerfer (130a, 130b) beleuchteten Bereich (410) vor dem Fahrzeug (100) in Bewegungsrichtung (400) des Fahrzeugs (100) erfasst.

8. Vorrichtung (120) zur Anpassung einer Lichtaussendung von zumindest einem Scheinwerfer (130a, 130b) eines Fahrzeugs (100), wobei die Vorrichtung (120) die folgenden Merkmale umfasst:
- eine Einheit zum Erkennen eines instabilen Fahrtzustandes des Fahrzeugs (100), wobei sich in dem instabilen Fahrtzustand eine Richtung einer Fahrzeuglängsachse (125) um mehr als einen Toleranzbereich von einer Bewegungsrichtung (123, 400) des Fahrzeugs (100) unterscheidet; und
- eine Einheit zum Bereitstellen eines Ansteuersignals (135) zur Veränderung der Lichtaussendung des Scheinwerfers (130a, 130b) des Fahrzeugs (100), wobei das Ansteuersignal (135) ausgebildet ist, um zur Anpassung der Lichtaussendung eine Veränderung der Lichtausstrahlungscharakteristik (145, 150, 155) des Scheinwerfers (130a, 130b) des Fahrzeugs (100) zu bewirken.

9. Computer-Programmprodukt mit Programmcode zur Durchführung des Verfahrens (300) nach einem der Ansprüche 1 bis 7, wenn das Programm auf einer Vorrichtung (120) ausgeführt wird.
